Europäisches Patentamt

(19) European Patent Office

Office européen des brevets

(11) Publication number: 0 104 662
A2

# (12) EUROPEAN PATENT APPLICATION

(21) Application number: 83109752.2

(22) Date of filing: 29.09.83

(51) Int. Cl.³: H 04 N 1/12
H 04 N 1/04

(30) Priority: 29.09.82 GB 8227750
29.09.82 GB 8227751
29.09.82 GB 8227752

(43) Date of publication of application:
04.04.84 Bulletin 84/14

(84) Designated Contracting States:
DE FR IT SE

(71) Applicant: International Standard Electric Corporation
320 Park Avenue
New York New York 10022(US)

(72) Inventor: Heeks, John Stuart
6 Staffords Churchgate Street
Old Harlow Essex(GB)

(72) Inventor: Cooke, Roger Ernest
6 Willow Close
Bishop's Stortford Herts CM23 2RY(GB)

(74) Representative: Graf, Georg Hugo, Dipl.-Ing. et al,
c/o Standard Elektrik Lorenz AG Patent- und
Lizenzwesen Postfach 300 929 Kurze Strasse 8
D-7000 Stuttgart 30(DE)

(54) Method and apparatus for transferring information signals to and/or off a recording medium.

(57) For transferring information to a recording medium a laser (2) is modulated with the information signals. The modulated output beam (8) of the laser (2) is applied to a surface acoustic wave device (4) via collimating optics (3). The surface acoustic wave device (4) is controlled by scanning signals from a control circuit (1) applied to a transducer (7) at the device (4). The scanned light beam (9) is focussed by optics (5) onto a recording medium, which may be a rotating selenium drum (6). The electrostatic images which are formed on the surface of the drum by the scanned beam is subsequently transferred by conventional dry powder printing techniques.

For transferring information out of a recording medium, for example a document, the output beam of the laser (2) is unmodulated. The unmodulated scanned light beam is reflected from the document wrapped around a drum. The reflected light is picked up at a photodetector deriving electrical signals which can be sent to a remote location.

./...

International Standard Electric

Corporation, New York


J.S. Heeks - R.E. Cooke 37-5/6/7


### Method and Apparatus for transferring Information Signals to and/or off a Recording Medium


The invention relates to a method and apparatus for transferring information signals to and/or off a recording medium by at least one light medium transverse to the moving direction in parallel manner.

This method and working according to this method apparatus are known, for example from the facsimile techniques.

Recent advances in telecommunications and electronics have given rise to requirements for the high speed transmittal and reproduction of information over electrical or optical communications systems and these have, in turn, provided needs for high speed recording and/or reading of such information. Hitherto systems such as telex have provided both transmission means and recording means. However such systems are comparatively slow by present day standards, when digital computers are capable of very high data processing rates and can transmit data to remote locations at speeds much higher than those which electro-mechanical printing methods can handle.


ZT/P1-vHy/B

22.09.1983

J.S. Heeks 37-5/6/7

It is therefore the object of the invention to record and/or read information by a method and by means which are not subject to the general limitations of electromechanical devices.

This object is achieved by the invention as claimed in method claim 1. In the subclaimes are further embodiments of the method claim 1 and the apparatus claims.

The advantages offered by the invention are mainly that there are no mechanical moving parts for scannig the light beam. This permits high speed recording and reading of information as required by modern telecommunication and electronic data processing equipments.

Embodiments of the invention will now be described as examples with reference to the accompanying drawings, in which:

Figure 1    illustrates schematically the basic elements of an information transfer apparatus according to the invention,

Figure 2    illustrates a basic surface acoustic wave deflection device for a modulated beam of light,

Figure 3    illustrates the surface acoustic wave device of Figure 2,

Figure 4    illustrates in block schematic form a print station,

Figures 5 - 7 illustrates principles of scan expansion optics applicable to the print station of Figure 4,

./.

0104662

J.S. Heeks 37-5/6/7

Figure 8    illustrates a double sided printing arrangement,

Figure 9    illustrates a two colour printing arrangement

Figure 10   illustrates a double copy printing arrangement,

Figure 11   illustrates a character reading arrangement,

Figure 12   illustrates a pair of surface acoustic wave
            deflectors formed on opposite surfaces of an
            acousto-optic substrate; and

Figure 13   illustrates how the two deflectors of Figure 2
            each provide on half of a line scan.

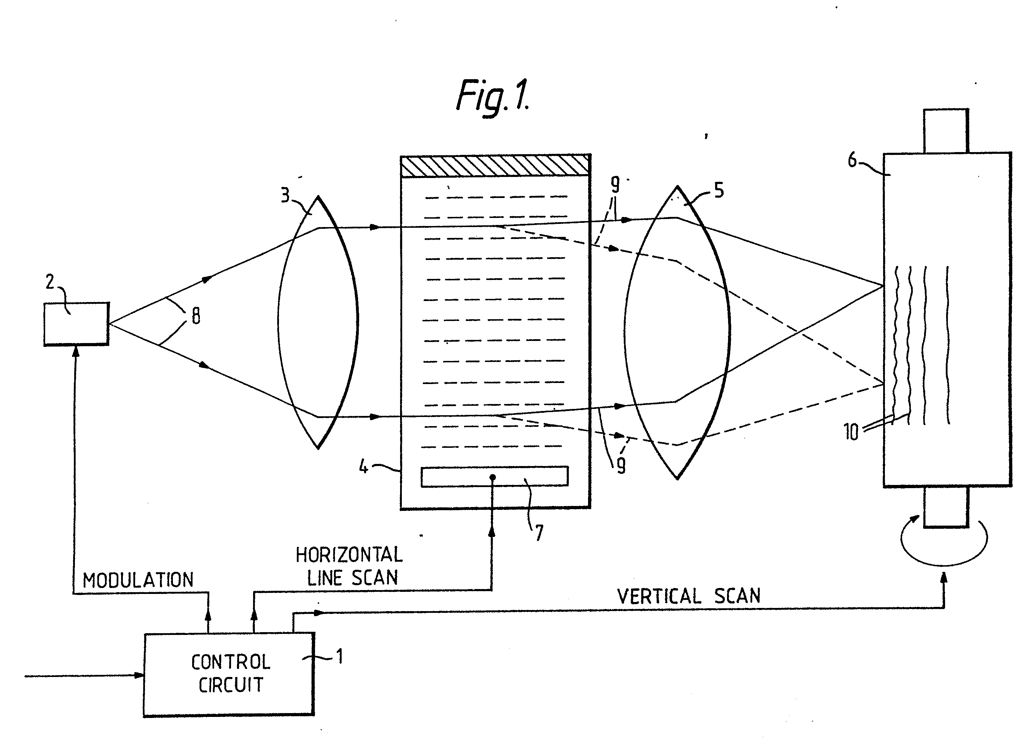

The invention concerns the use of acousto-optic scanning techniques to achieve a quiet, versatile font high speed, high resolution print station capability. In the arrangement shown in Figure 1 information to be transferred to a recording medium is received in the form of electrical signals representing either digital encoded information or tone coded signals at control circuitry 1. The incoming signals are used to generate modulation signals which are applied to a laser 2. The output light beam 8 from the laser is passed, via optics 3, to a surface acoustic wave Bragg cell 4. The control circuitry also generates a deflection signal which is applied to a transducer 7 on the Bragg cell 4 to cause a horizontal line scan deflection of the modulated light beam 8. The scanning beam 9 is then focussed by optics 5 onto a moving recording medium, e.g. a selenium drum 6 which is rotating under the control of circuit 1 to provide a vertical scan. The electrostatic images 10 formed on the drum 6 can then be transferred to paper using conventional copier techniques.

./.

0104662

J.S. Heeks 37-5/6/7

The essential feature of this approach is the surface acoustic wave device 4 comprising a Lithium Niobate or similar substrate suitably processed by diffusion or ion implantation techniques to produce a surface layer of higher refractive index than the body of the substrate and in which the optical beam 8 can subsequently be guided. Light is coupled to and from this layer by separate prism or other suitable coupling assemblies which, with the appropriate optics 3 and 5 respectively, interface to the light source 2 and photosensitive medium 10. The transducer 7 generates an acoustic wave in this layer at right angles to the light beam 8 causing the refractive index of the layer to be modulated and so producing a diffraction grating. Optimization of the drive power to this transducer 7, and therefore the depth of index modulation achieved, together with the interaction length of the grating region enables diffraction of the light energy into the first grating order which can then be scanned by controlling the drive frequency and, hence, the grating period. The device 4 can operate with either a gas or semiconductor laser source 2, utilizing selenium drum technology for plain paper operation, otherwise writing onto suitable photosensitive paper for direct application.

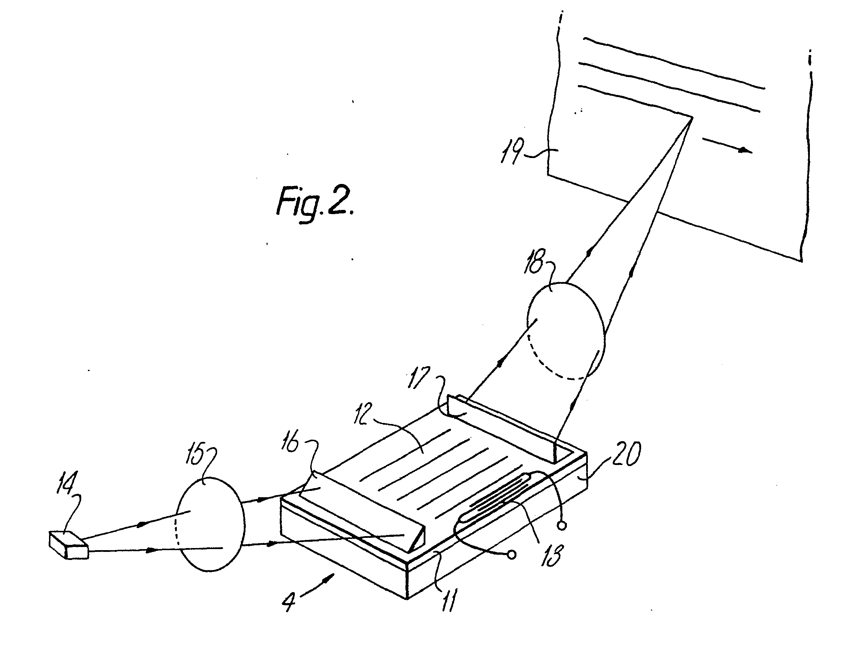

Figure 2 shows a basic surface acoustic wave deflection device 4 comprising a substrate 20 supporting a layer 11 of waveguide material in which surface acoustic waves 12 can be propagated from transducer 13. A beam of modulated light from a laser 14 is directed via collimating optics 15 onto a prism 16 whereby the light is coupled into the layer of waveguide material, the light propagating in a direction transverse the direction of propagation of the surface acoustic waves. The light is coupled out of the waveguide material by a second prism 17 and is focussed by optics 18 onto a surface 19. When an r.f. signal is applied to the

./.

J.S. Heeks 37-5/6/7

transducer 13 a surface acoustic wave pattern is propagated of the light occurs. By suitably modulating the r.f. signal the Bragg deflection can cause a focussed spot of light to scan the surface 19. The surface 19 can then be moved incrementally in synchronism with the scanning beam to provide a line-by-line coverage of the surface. The r.f. scanning signals are similarly synchronised with the modulation signals applied to the laser. Thus, in a printing arrangement characters can be built-up in a manner similar to that already known in certain types of facsimile apparatur in which the scanning of a rotating recording medium is achieved electro-mechanically. The advantage of the arrangement as described before is that it has no moving parts other than those required to move the surface 19 past the single scanning line position. Hence the scanning and modulation of the light beam can be accomplished at very high speeds. If the surface 19 is a selenium drum as is used in photocopiers images can be built-up very rapidly on the drum and these images can then be transferred in permanent visual form to paper by standard photocopier techniques.

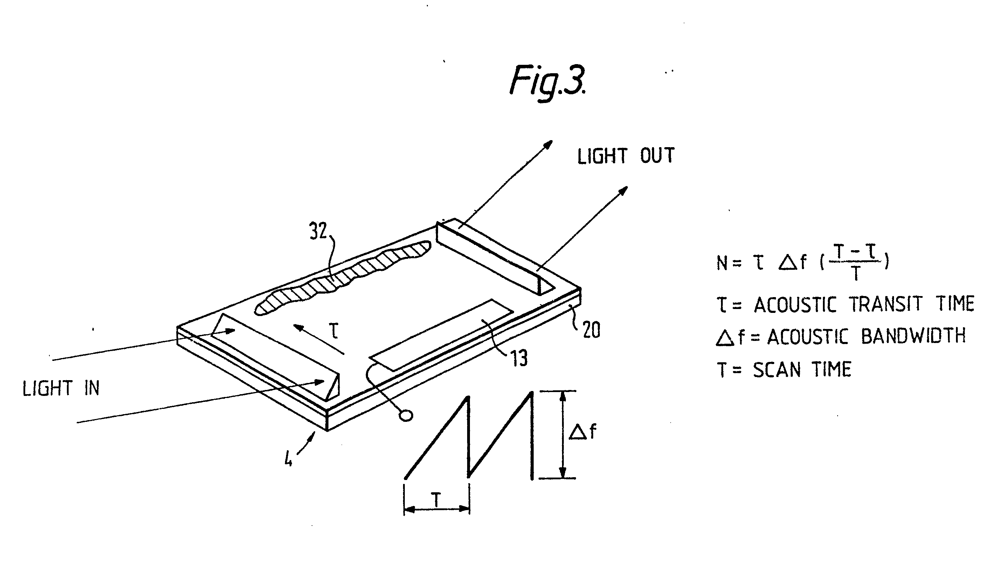

As shown in Figure 3 an acoustic wave energy absorbent wax 32 may be placed on the far side of the substrate 20 to absorb the wave energy once it has traversed the light path. Regular line scanning of the beam is effected by applying a ramp waveform to the transducer 13. The number of resolvable spots N is given by

$$N = \Delta f \frac{T - \tau}{T}$$

where $\tau$ = acoustic transit time

$T$ = scan time

$\Delta f$ = acoustic bandwidth

J.S. Heeks 37=5/6/7

Alternatively methods of coupling the light beam with the surface acoustic wave device 4 include edge coupling, or coupling by means of an optical grating.

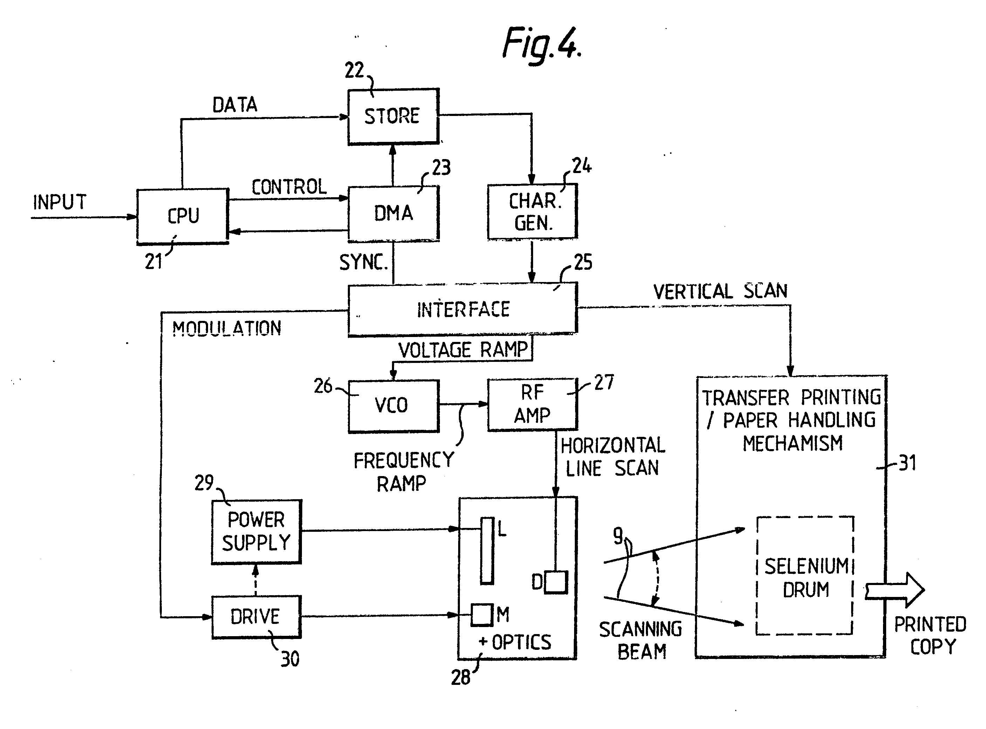

Figure 4 illustrates in more practical detail a print station based on the elements of Figure 1 and 2 respectively. The incoming signals, e.g. a digital input, are fed to a central processor unit (CPU) 21. The CPU provides the interfaces with the external equipment and the functional controls of the printer. Combining the flexibility of a microprocessor with programmable peripheral devices given a selection of interfaces. As well as a parallel interface, both synchronous and asynchronous serial interfaces can be provided with a variety of transmission rates. The CPU recognises control codes in print data to ensure correct storage of the text and start of printing. The text is sent to a text store 22, which allows a full page of text to be transferred to the printer at the full transmission rate. One or more copies of the text can then be printed at high speed. For high speed printing of similar documents, updating of part of the page would be possible to reduce transmission time. A direct memory access (DMA) 23 provides high speed data retrieval of text codes from the text store for rapid printing, these being converted by a character generator 24 into paterns defining the character shapes. The interface circuits 25 convert the character shape patterns into a serial data stream with end of line and end of page blanking. A line scan voltage ramp is generated in synchronism with the serial data stream and a page synchronisation pulse is generated to start the printer mechanisms. A line scan frequency ramp is generated from the voltage ramp by a voltage controlled oscillator (VCO) 26 and this frequency ramp is applied via RF amplifier 27 to the deflector D and optics to focus the laser beam onto a photosensitive

./.

J.S. Heeks 37-5/6/7

surface. The laser L is powered from a supply 29. The laser modulator drive circuits 30 convert the logic pulses in the serial data stream to suitable voltage and current levels for driving a modulator M for a CW laser (or driving the modulation of a semiconductor laser directly). A selenium drum and paper handling mechanism 31 is used to provide the hard copy printing facility. The laser is focussed to write on to the drum, producing an electrostatic pattern of the text or graphics characters. The drum picks up powder ink on the electrostatic pattern and deposits it on to plain paper. The ink is set in e.g. a pressure process to produce the printed copy.

An apparatus such as that of Figure 4 is that the laser may be required to scan a line typically 2oo mm wide. An inherent characteristic of acousto-optic scanning techniques is the relatively small angular deflection of the scanning beam which is restricted to within a few degrees of its centre point. Thus, an optical system with a focal length of several metres has to be used in order to form a scan of the correct size. Clearly, it is not practicable to accommodate this distance between the deflector and the image plane and expansion optics can be designed which will form a line scan of the required lenght within a "practical" distance of the deflector.

There are several methods of reducing this distance from the deflector to the image plane. One simple method is to reflect the beam several times between two parallel mirrors. It is also possible to use prisms to expand the angular scan and, therefore, shorten the focal length. Alternatively, it is possible to design an optical system which has a long focal length but a relatively short distance from the deflector to the image. The latter method is preferably employed for the present system, although prisms and mirrors may also be used if it is desirable to do so.

J.S. Heeks 37-5/6/7

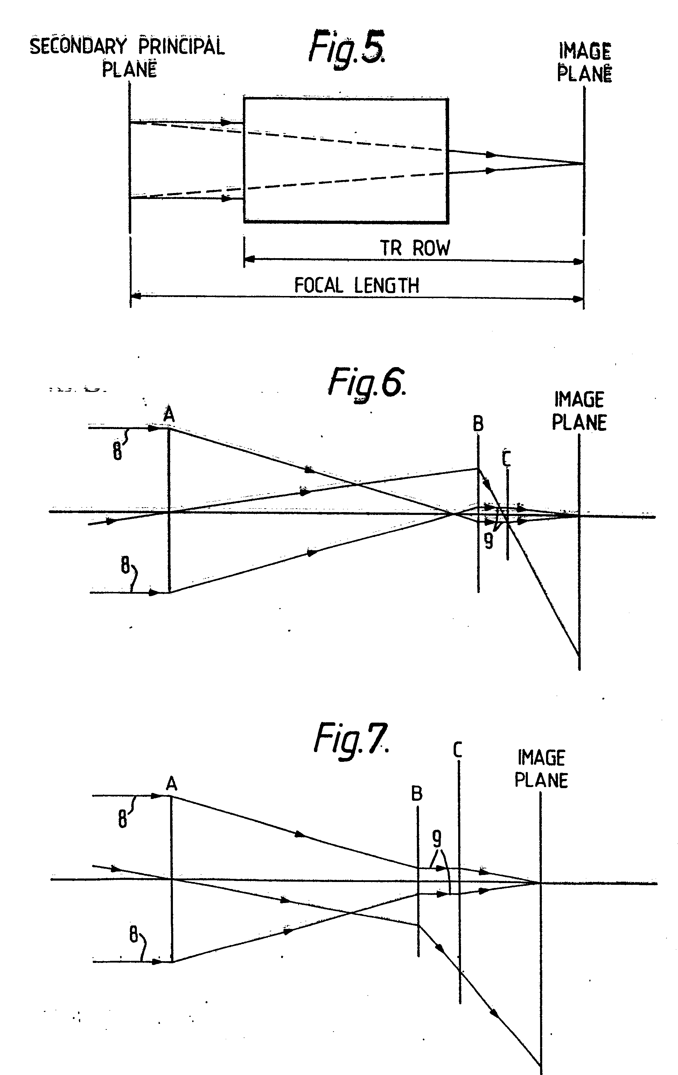

The effective focal length of a lens system is measured from the system's secondary principal point, a point where the secondary principle plane intersects the axis of the system. If the secondary principal plane is positioned some distance before the first element of the system, the distance from the first lens element to the image plane (the throw) will be less than the focal length (Figure 5). Figures 6 and 7 show two systems where this is true. In Figure 6, lenses A, B and C have positive focal lengths and A and B are positioned so that their focal planes coincide. The collimated input beam is focussed by lens A and recollimated by lens B, producing an angular magnification of $f_A/f_B$ (the ratio of the focal lengths of lenses A and B). Lens C focusses the output. Figure 7 shows a similar system but where lens B has a negative focal length. In both cases lens C could be omitted and its operation performed by lens B.

In practice, the system may use several lenses to correct aberrations and the operation of each element may not be clear cut. The expansion optics also need to be anamorphic because acousto-optic deflectors have rectangular apertures and, therefore, the system may include cylindrical elements, prisms or other anamorphic elements.

However, there are various applications in which optical scanning techniques can be adapted to provide high speed work stations with functional needs for data input, output and storage. In particular two surface acoustic wave deflection devices fabricated in a "back-to-back" configuration on a common substrate can provide two scanning operations which may be inter-related or independent.

./.

0104662

J.S. Heeks 37-5/6/7

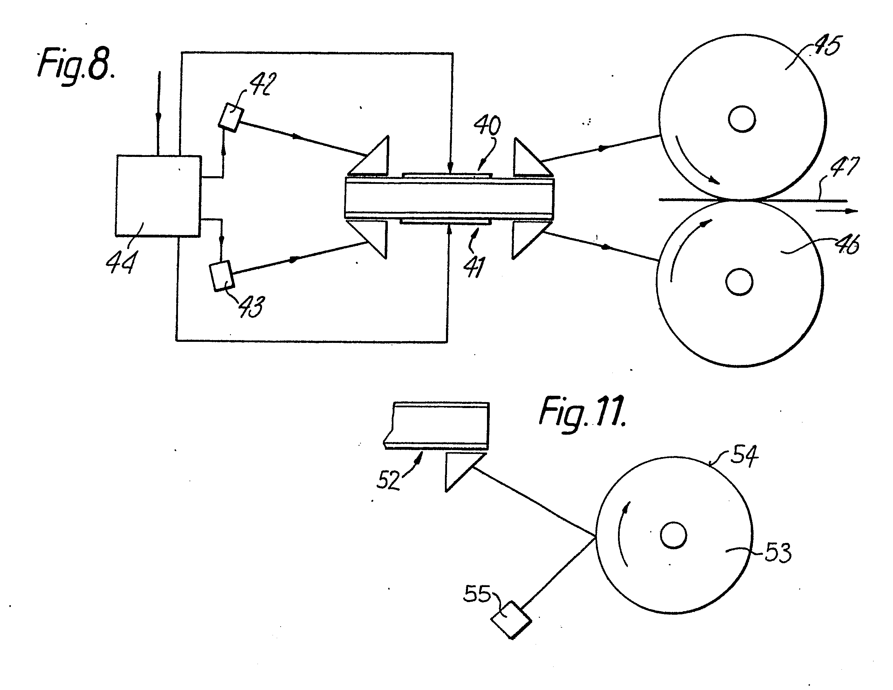

In the arrangement shown in Figure 8 two surface acoustic wave deflection devices 40, 41 are formed on a common substrate. Each deflection device is of the type shown in Figure 1 and 2 respectively, i.e. each device has its own optical coupling means and r.f. signal transducer. The two deflection devices are provided with independent laser sources 42, 43 (for the sake of simplicity all the collimating and focussing optics have been omitted from this and subsequent Figures - such optics are assumed.) Input data is received by a control circuit 44 where timing information is extracted and timing modulation controls generated. The two lasers are independently modulated whilst the deflection devices are operated in synchronism so as to build-up two sets of images on respective selenium drums 45, 46. Using conventional electrostatic copier techniques the two sets of images are then transferred in permanent visual form to two sides of a single sheet recording medium, i.e. a sheet of paper 47. This double sided printer can print the two sides of the paper in the same or different colours. It will be appreciated that the input data can be derived from a remote location from whence it can be transmitted to the printer via electric conductors, optical fibres or even radio signals.

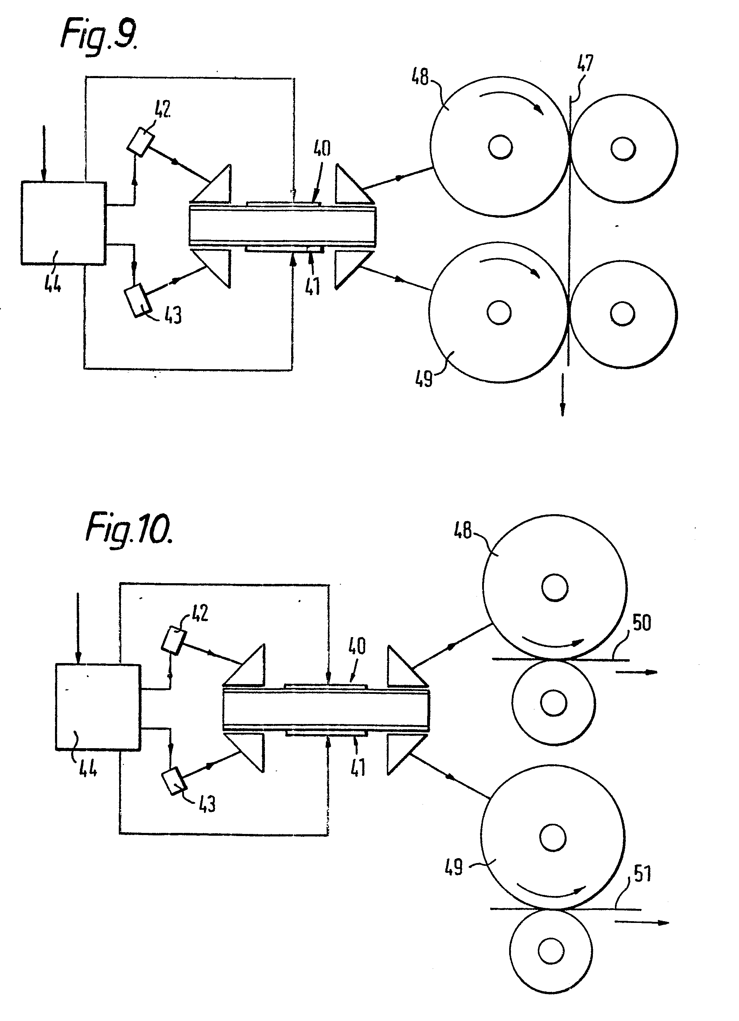

In the arrangement shown in Figure 9 independent printing is effected by two selenium drums 48 and 49 on the same side of the paper 47 or the like, thus enabling two colour printing to be effected. In the arrangement shown in Figure 10 the same modulation is applied to both lasers 42 and 43. In this simultaneous printing of an original 50 and a copy 51 are achieved, e.g. on identical sheets of paper, two different colours or grades of paper or on one sheet of paper and one sheet of a different material.

./.

0104662

J.S. Heeks 37-5/6/7

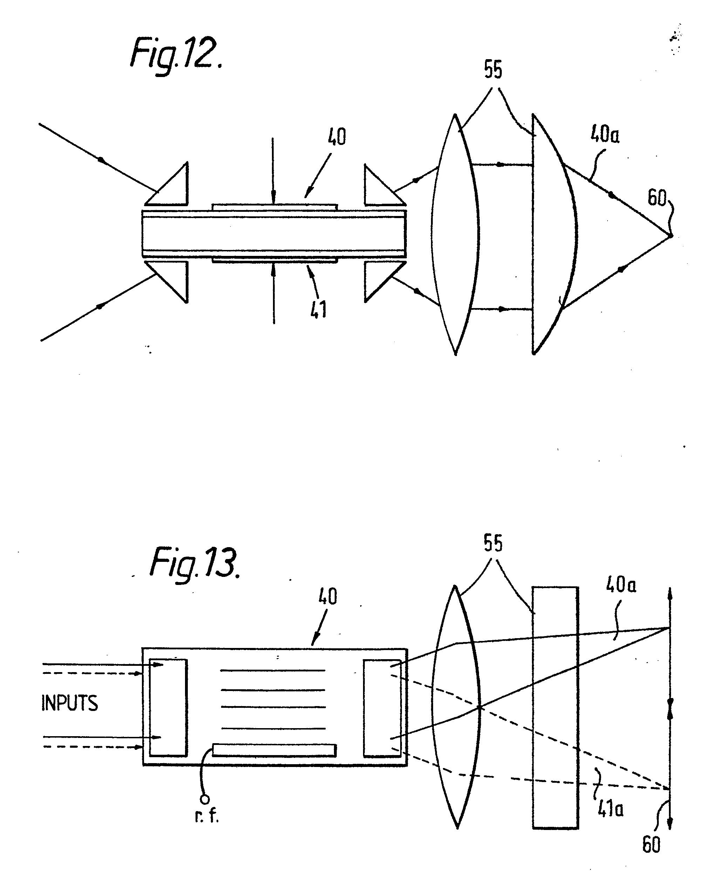

The invention is particularly suitable for operation in a full duplex facsimile system. In this case only one of the surface acoustic wave deflection devices is provided with information modulated light for printing via a selenium drum. The other deflection device 52 scans unmodulated light across a platen, Figure 11, on which graphical material is carried, e.g. a drum 53 with paper 54 wrapped around it.

Light reflected from the paper 54 is picked up at a photodetector 55 and electrical signals are thereby derived which can be sent to a similar duplex facsimile machine at a remote location.

In the arrangement shown in Figures 12 and 13 two surface acoustic wave deflection devices 40, 41 are formed on a common substrate 22 as described before. Each deflection device is of the type shown in Figure 1 and 2 respectively, i.e. each device has its own input and output optical coupling prisms and its r.f. signal transducer for launching surface acoustic waves across the optical path. (For the sake of simplicity all the collimating input optics have been omitted and the output optics 55 are only represented schematically.) The output optics 55 are arranged so that the two scanned outputs 40a, 41a are directed to scan different parts of the same line 60. This is shown more clearly in Figure 13, in which output 40a is shown as scanning one half of a line 60 whilst output 41a scans the other half of the line 60.

The optical inputs can be either both derived from a single source, via suitable optics (not shown) or from separate sources (not shown). In the case of a single source the modulated optical signal can be applied to separate deflection devices 40, 41 simultaneously or sequentially.

./.

0104662

J.S. Heeks 37-5/6/7

However, the r.f. deflection signals are applied to the two devices sequentially so that the modulated light beam are first scanned by one device 40 across one half of the line 60 and then by the other device 41 across the second half of the line 60.

When two separate sources are used they are modulated separately in synchronism with the deflection signals applied to the two deflection devices.

The amount of deflection obtainable from a surface acoustic wave device is limited, typically deflections of $\pm 1.5^{\circ}$. Thus two devices working in the manner shown in Figure 13 can together achieve a total deflection coverage of about $\pm 3^{\circ}$.

./.

- 1 -

0104662

International Standard Electric

Corporation

J.S. Heeks - R.E. Cooke 37-5/6/7

Patent claims

1. A method of transferring information signals to and/or off a recording medium (10) by at least one light beam (8, 9) scanning a surface of the recording medium (10) transverse to the moving direction in parallel manner, characterized in that the light beam (8) is applied to a surface acoustic wave device (4) having a transducer (7) for causing surface acoustic waves, and that deflection control signals are applied to the transducer (7) so as to scan the light beam (8) and applying the scanning light beam (9) to the surface of the recording medium (10).

2. A method according to claim 1 with two light beams scanning a surface of a recording medium, characterized in that each light beam is applied to an individual surface acoustic wave device (40, 41).

3. A method according to claim 2, characterized in that at least one of the light beams is modulated with the information signals.

ZT/P1-vHy/B
22.09.1983

./.

J.S. Heeks 37-5/6/7

4.  A method according to claim 3, characterized in that one of the light beams is modulated with the information signals and applied to a surface sensitive to the light beam to record the information in the form of transient images, and that the images are subsequently transferred in permanent visual form to a sheet recording medium, and the other light beam is applied simultaneously to a surface (54) having recorded thereon visual images whereby light reflected from the surface (54) is directed to a photodetector means (55) to create information carrying electrical signals.

5.  A method according to claim 2, characterized in that both light beams are simultaneously modulated with the same or different information signals and applied to two surfaces (45, 46; 48, 49) each sensitive to a respective one of the light beams to record the information in the form of transient images, and that the images are transferred subsequently in permanent visual form.

6.  A method according to claim 2, characterized in  that the scanning light beams are applied simultaneously or sequentially to a common surface of a sheet recording medium (47).

7.  A method according to one of the proceeding claims, characterized in that the visual images are transferred in different colours.

8.  A method according to claim 2, characterized in that both light beams (40a, 41a) are simultaneously modulated with different information signals and applied indipendently and sequentially to the recording medium (60) such that each scanning light beam (40a, 41a) provides respectively a different part of the scan.

                                                    ./.

0104662

J.S. Heeks 37-5/6/7

9. Apparatus to perform the method according claim 1, characterized in that the acoustic wave device (4, 40, 41, 52) comprises a surface acoustic wave Bragg cell.

10. Apparatus to perform the method according claims 1 or 2, characterized in that the light beam is coupled into and out of the surface acoustic wave device (4) by prisms (16, 17).

11. Apparatus to perform the method according claim 1, characterized in that scan expanding optics (5) are interposed between the acoustic wave device (4) and the recording medium (6).

12. Apparatus to perform the method according claim 2, characterized in that the two surface acoustic wave devices (40, 41) are fabricated on surfaces of a common supporting substrat.

./.

# Fig.1.

MODULATION

HORIZONTAL
LINE SCAN

VERTICAL SCAN

CONTROL
CIRCUIT

Fig.2.

Fig.3.

LIGHT OUT

LIGHT IN

$N = \tau \, \Delta f \left(\frac{T - \tau}{T}\right)$

$\tau$ = ACOUSTIC TRANSIT TIME

$\Delta f$ = ACOUSTIC BANDWIDTH

$T$ = SCAN TIME

## Fig.4.

0104662

*Fig.5.*

SECONDARY PRINCIPAL PLANE

IMAGE PLANE

TR ROW

FOCAL LENGTH

*Fig.6.*

IMAGE PLANE

A    B    C

8    8    9

*Fig.7.*

C    IMAGE PLANE

A    B

8    9    8

0104662

Fig.8.

Fig.11.

## Fig.9.

48  47

42

40

44

41

43

49

## Fig.10.

48

42

50

40

44

41

43

49

51

0104662

# Fig.12.

55

40

41

40a

60

# Fig.13.

55

40

INPUTS

r. f.

40a

41a

60

J.S.HEEKS 37-5/6/7